Europäisches Patentamt

European Patent Office

Office européen des brevets

(11) Publication number: **0 600 537 A1**

# EUROPEAN PATENT APPLICATION

(21) Application number: **93203261.8**

(22) Date of filing: **22.11.93**

(51) Int. Cl.5: **G02F 1/1343**, G09G 3/36

(30) Priority: **30.11.92 EP 92203685**

(43) Date of publication of application:
**08.06.94 Bulletin 94/23**

(84) Designated Contracting States:
**DE FR GB IT NL**

(71) Applicant: **PHILIPS ELECTRONICS N.V.**
**Groenewoudseweg 1**
**NL-5621 BA Eindhoven(NL)**

(72) Inventor: **Verhulst, Antonius Gerardus**
**Hendrikus**
**c/o INT. OCTROOIBUREAU B.V.,**
**Prof. Holstlaan 6**
**NL-5656 AA Eindhoven(NL)**

(74) Representative: **Raap, Adriaan Yde et al**
**INTERNATIONAAL OCTROOIBUREAU B.V.,**
**Prof. Holstlaan 6**
**NL-5656 AA Eindhoven (NL)**

(54) **Display device.**

(57) The requirements with respect to minimum detail size are less stringent when a part (10) of a column sub-electrode ($2^d$) or the part of a pixel (3) defined thereby is rendered opaque in a bistable pixel (ferroelectric LCD, STN) in which grey levels are realised by dividing column electrodes (2) into column sub-electrodes ($2^a$, $2^b$, $2^c$, $2^d$). The number of grey scales can be further increased by means of weighted drive.

FIG.1

FIG.2

Rank Xerox (UK) Business Services
(3.10/3.09/3.3.4)

The invention relates to a display device comprising a bistable electro-optical medium between two supporting plates provided with column electrodes and row electrodes, respectively, which define pixels at the location of their crossings, the column electrodes being divided into column sub-electrodes which define sub-pixels at the location of a row electrode.

In this respect a bistable electro-optical medium is understood to mean any medium which switches between two optical states with a steep transition characteristic (transmission-voltage characteristic curve) or with a hysteresis in this transition characteristic as is used, for example in liquid crystal display devices such as supertwist display devices or ferro-electric display devices. However, the invention is also applicable to, for example twisted nematic display devices which only switch between the on and off states.

The two optical states determine the two extreme transmission levels (possibly together with polarizers and/or reflectors) and hence the extremes of the grey scale. Stages of the grey scale (or grey hues) are understood to mean intermediate transmission levels.

A display device of the type mentioned in the opening paragraph is described in EP-A-0 316 774. The display device shown in this application is operated by means of the multiplex drive mode in which in a system of crossing selection or address lines (row electrodes) and data lines (column electrodes) the drive is realised by alternately energizing the address lines, while the information to be written is presented to the data lines. By dividing the column electrodes into sub-electrodes having a different surface area (for example, in accordance with surface ratios of 8:4:2:1) different transmission levels (grey scale stages) can be introduced when using such a display device in transmission.

With such a division 16 grey scales (intermediate levels) (including fully transmissive and fully opaque) can be realised and the width of the narrowest sub-column is approximately 1/15 of the total column width. For a total column width of approximately 75 $\mu$m the width of the narrowest sub-column is approximately 5 $\mu$m, which imposes very strict requirements on the tolerances during manufacture.

It is, *inter alia*, an object of the present invention to provide a display device of the type described in the opening paragraph in which grey levels can be obtained *via* energization of sub-electrodes while imposing less stringent requirements on said tolerances.

To this end a display device according to the invention is characterized in that at least a part of the surface area of the pixel is opaque at the location of at least one of the column sub-electrodes. Preferably, two column sub-electrodes have the same width and at least a part of the surface area of the pixel is opaque at the location of at least one of the column sub-electrodes of the same width. By rendering half the surface area of the pixel opaque at the location of one column sub-electrode, the loss of light within a pixel remains very limited.

This can be achieved by means of column sub-electrodes at least one of which has a part of its surface area which is opaque or light-absorbing. Alignment problems of the column sub-electrodes with respect to opaque parts on the other substrate are then prevented.

The invention is based on the recognition that the quantity of light-transmissive surface area (in the case of operation in transmission) is decisive. By dividing, for example a column electrode in accordance with a width ratio of 8:4:2:2, in which half the surface area of one of the two narrowest sub-electrodes is light-transmissive, 16 grey levels can also be defined. The width of the narrowest column sub-electrode is now, however, 1/8 of the total column width, which considerably simplifies the manufacture of such a device due to the lower tolerances. Other width ratios of the column sub-electrodes are alternatively possible, for example 8:4:2:3 in which 2/3 of the surface area of the narrowest column sub-electrode but one has been made opaque. A division in accordance with the ratio 1:1:1:1:1:1 may alternatively be chosen in which half the surface area of one of the column sub-electrodes is opaque. This provides the possibility of defining 12 grey levels, while the width of the narrowest column sub-electrode is 1/6 of the total column width. Another possibility is a division in accordance with the ratio 4:2:2:2 in which two of the narrowest sub-electrodes have been made partly opaque (for 50% and 75%, respectively, of their surface areas).

The sub-electrodes may be rendered opaque by anodization or by electroless metallization. When used in a display device operating in reflection, a portion of a column sub-electrode may be rendered, for example light-absorbing by means of black chromium or by means of absorbing polyimides. The opaque portions of adjacent or subjacent pixels may then be formed as one whole.

The number of grey levels in a finished display device (including drive electronics) can be further increased by providing the device with means for weighted drive. In a device in which n grey levels can be realised in a pixel, the pixels are activated during $(1/n+1)^{st}$ part and $(n/n+1)^{st}$ part of, for example one frame period and brought to one of the two optical states. The optical state weighted over a frame period then determines the grey level. The number of grey levels is thereby raised to $n^2$.

In this way sufficient grey levels for datagraphic and television applications can be obtained with a small number of column sub-electrodes.

These and other aspects of the invention will be apparent from and elucidated with reference to the embodiments described hereinafter.

In the drawings

Fig. 1 is a diagrammatic plan view of a pixel of a display device according to the invention,

Fig. 2 is a cross-section taken on the line II-II in Fig. 1,

Fig. 3 is a diagrammatic plan view of a part of a display device according to the invention with a plurality of pixels, as is shown in Fig. 1,

Fig. 4 shows a modification of the display device of Fig. 3, while

Fig. 5 shows a modification of the pixel shown in Fig. 1 and

Fig. 6 shows diagrammatically a display device including the drive section.

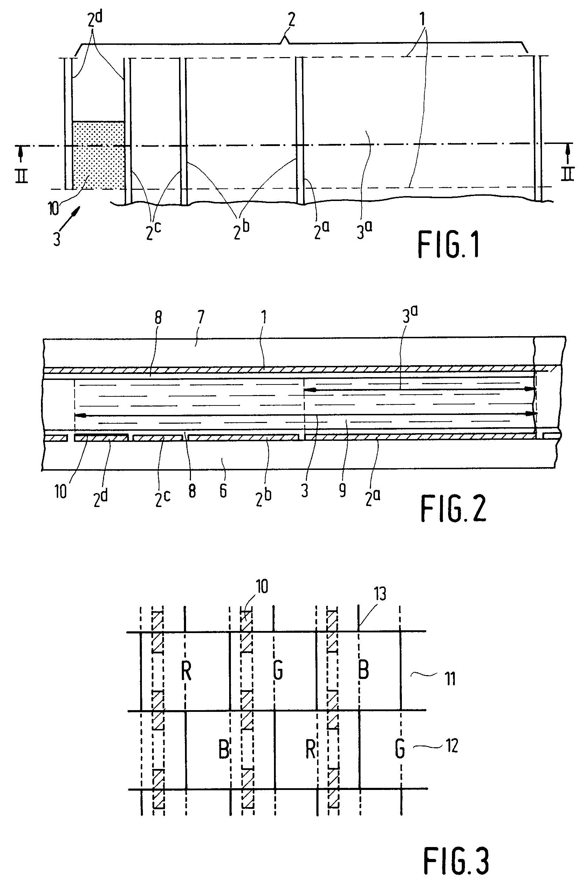

Fig. 1 is a diagrammatic plan view of a division of electrodes 1, 2 between which an electro-optical material is present (see also Fig. 2). In this embodiment the electrodes are, for example a row electrode 1 and a column electrode 2 which is divided into sub-electrodes whose widths are in a mutual ratio of 8:4:2:2. At the location of the crossings of the column electrodes 2 (column sub-electrodes $2^a$, $2^b$, $2^c$, $2^d$) and a row electrode 1 a display cell 3 is defined which can entirely or partly change its electro-optical properties by suitably driving the column sub-electrodes.

If a ferroelectric liquid crystal is chosen as an electro-optical material, or if another bistable switching display element such as a supertwist-nematic liquid crystal display is chosen, such a voltage can be applied to the (sub-)electrodes that a given voltage threshold is exceeded and the transmission state changes locally, for example from light-absorbing to light-transmissive, or *vice versa*. This behaviour can also be determined by the position of polarizers which may be present.

Since the electrode 2 is divided into sub-electrodes, it is possible to drive only a portion of the display cell 3. For example, upon correct energization of the electrode 1 and the sub-electrode $2^a$, the portion $3^a$ of the display cell is driven so that this portion becomes, for example light-absorbing, while the other portion of the display cell remains light-transmissive. By energizing the (sub-)electrodes 1, 2 in a different way, different surface areas of the display cell 3 can be driven so that different light-transmissive/light-absorbing (white/black) ratios are obtained, in other words, different grey levels or transmission levels.

Fig. 2 is a diagrammatic cross-section of a part of the device, taken on the line II-II in Fig. 1.

The electrodes 1 and 2 are formed as parallel strips of transparent conducting material (for example, indium-tin oxide) on transparent supporting plates or substrates 6, 7 of, for example glass or quartz. The electrode 2 is subdivided into column sub-electrodes $2^a$, $2^b$, $2^c$, $2^d$ whose widths, as stated, are in a ratio of 8:4:2:2. To give the liquid crystal molecules at the location of the electrodes a given preferred direction, an orientation layer 8 is provided on one or both substrates. A layer of liquid crystal material 9, in this case a ferroelectric liquid crystal material, is present between the two substrates 6, 7. The device may be used as a display device and will be conventionally provided with polarizers, colour filters and/or mirrors, as well as a source of illumination.

In this embodiment the column sub-electrode $2^d$ has the same width as the column sub-electrode $2^c$ and a part 10 of its surface area (in this embodiment 50%) has been rendered opaque. It has been assumed that the device is operated in transmission; for a device operated in reflection the part 10 is rendered, for example light-absorbing. In this embodiment the part 10 is rendered opaque by means of a layer of, for example nickel which is deposited on the sub-electrode $2^d$ by means of selective deposition, for example electroless metallization.

The width of the narrowest column sub-electrodes $2^c$, $2^d$ is now approximately 1/8 of the total column width, while this would be approximately 1/15 for a division in accordance with the ratio 8:4:2:1, so that much less stringent requirements are imposed on the photolithographic techniques used during manufacture, while the transmission loss remains limited. Nevertheless grey levels can be realised with the pixel 16 shown (and with weighted drive 256) by driving the column sub-electrodes 2 separately or in combination because their surface areas defining the transmission ratio are in a mutual ratio of 8:4:2:1.

Fig. 3 is a diagrammatic plan view of a column subdivision as described with reference to Fig. 1 in which pixels in successive rows are shifted over half their width for obtaining a delta structure of the colour elements R, G and B associated with the pixels. Column sub-electrodes defining, together with an opposite row electrode a pixel in row 11 are now associated with different pixels in row 12. By shifting over half a pixel the narrowest column sub-electrodes in row 12 are now situated between the wider column sub-electrodes. By suitably chosen drive, the red, blue and green pixels can still acquire the desired intermediate luminance. If necessary, a black matrix may be arranged between the pixels (and possibly also between sub-pixels), which matrix is denoted by reference numeral 13 in Fig. 3. As is apparent from the Figure, the parts 10 in this embodiment are common for pixels situated in successive rows. This simplifies manufacture because alignment of the parts 10 with respect to the black matrix 13 between the pixels is not critical in this case.

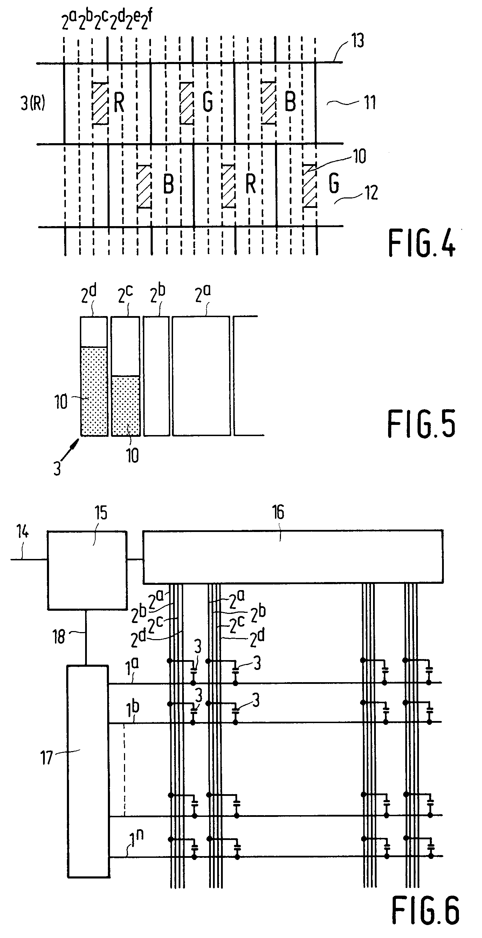

Fig. 4 shows a modification of Fig. 3 in which the column sub-electrodes (six in this embodiment) have the same width within one pixel. Per pixel, 12 transmission levels (grey levels) are now adjustable. The extreme levels are reached by energizing, for example no column sub-electrode upon selection of row 11 (fully light-transmissive with the exception of the area 10) so that in this embodiment the entire effective surface area of pixel 3(R) is light- transmissive, or by energizing all column sub-electrodes so that the complete pixel 3(R) is opaque. By energizing column sub-electrode $2^c$ only, 1/12 of the effective surface area will become opaque and 1/6 will become opaque upon energization of one of the other column sub-electrodes, while combinations render all other intermediate values possible (in steps of 1/12). By means of weighted drive the number of intermediate levels can be raised to 144.

Fig. 5 is a diagrammatic plan view of a pixel in which the widths of the column sub-electrodes are in a ratio of 2:1:1:1 and in which 50% and 75% of the surface areas of the column sub-electrodes $2^c$ and $2^d$, respectively, have been rendered opaque. Although here again the same number of grey levels can be realised as with the device of Fig. 1, 2 and the narrowest column sub-electrodes now cover no more than approximately 1/5 of the overall column width, this subdivision is at the expense of a large effective transmission or reflection surface area.

Fig. 6 shows diagrammatically how a weighted drive is performed in a device with pixels in accordance with Figs. 1, 2. Information 14 to be displayed is converted *via* a processing unit 15 into information which is stored in one or more registers 16. The row electrodes $1^a$, $1^b$ ..., $1^n$ are successively selected *via* a multiplex circuit 17, while information defining the optical state of the pixels is presented to the column sub-electrodes $2^a$, $2^b$, $2^c$, $2^d$ during a part of each line period. After $1/17^{th}$ of the drive period of a picture to be written (for example, one frame period) the same row electrodes $1^a$, $1^b$ ..., $1^n$ are again selected, while other (or possibly the same) information is presented to the column sub-electrodes (during the complementary part of the line period) defining a different (or the same) optical state of the pixels. The processing unit 15 includes, for example a picture memory for this purpose. The average optical state throughout one drive period defines the ultimate transmission level (grey level). A total number of 256 levels is now adjustable (including substantially transmissive and opaque). Mutual synchronization takes place *via* drive signals 18.

Since the information is modified after 1/17 part of the drive period, the display device is particularly suitable for fast switching electro-optical media such as ferro-electric liquid crystals.

The surface ratios of the sub-pixels in Figs. 1,3 may be more generally be represented as $2^n$: $2^{n-1}$: ...: 2:1 ($n \geq 3$) and 4:2:1, respectively. The display device is then driven in a weighted manner by alternately driving the sub-pixels during $(1/p + 1)^{th}$ and $(p/p + 1)^{th}$ part of the drive period, in which p = $2^{n+1}$ and 8, respectively. For column sub-electrodes the ratio of the widths is, for example, $2^n$: $2^{n-1}$: ...: 2:2 and 4:2:2, respectively. It holds for the device of Fig. 3 that in the case of weighted drive information is first presented during 1/13 part of the drive period and that new (or possibly the same) information is presented during the complementary part of the drive period (12/13 part). More generally, this information is presented during $(1/p + 1)$-$^{th}$ and $(p/p + 1)^{th}$ part, respectively, so as to bring the sub-pixels to different optical states during these periods (where p = 2n).

## Claims

1. A display device comprising a bistable electro-optical medium between two supporting plates provided with column electrodes and row electrodes, respectively, which define pixels at the location of their crossings, the column electrodes being divided into column sub-electrodes which define sub-pixels at the location of a row electrode, characterized in that at least a part of the surface area of the pixel is opaque at the location of at least one of the column sub-electrodes.

2. A display device as claimed in Claim 1, characterized in that a part of the surface area of at least one of the column sub-electrodes is opaque or light-absorbing.

3. A display device comprising a bistable electro-optical medium between two supporting plates provided with column electrodes and, extending transversely thereof, row electrodes, respectively, which, together with the electro-optical medium, define pixels at the locations of their crossings, the column electrodes being divided into sub-electrodes which may vary in width and, together with the electro-optical medium, define sub-pixels at the locations of their crossings with the row electrodes, characterized in that each sub-pixel is opaque over a part of its surface at the location of a column sub-electrode of the narrowest width.

4. A display device as claimed in Claim 3, characterized in that at least one of the column sub-electrodes of the narrowest width is opaque or light-absorbing over a part of its surface within each pixel.

5. A display device as claimed in Claim 1, 2, 3 or 4, characterized in that at least two column sub-electrodes have the same width and at least a part of the surface area of the pixel is opaque at the location of at least one of the column sub-electrodes of the same width.

6. A display device as claimed in Claim 5, characterized in that half the surface area of one of the column sub-electrodes of the same width is opaque or light-absorbing.

7. A display device as claimed in Claim 5 or 6, characterized in that the widths of the column sub-electrodes are in the ratio of $2^n:2^{n-1}:...2:2$ ($n \geq 3$) or of 4:2:2.

8. A display device as claimed in any one of the preceding Claims, characterized in that opaque or light-absorbing patterns or parts of column sub-electrodes are common for two pixels located in successive rows.

9. A display device comprising a bistable electro-optical medium between two supporting plates provided with column electrodes and row electrodes, respectively, which define pixels at the location of their crossings, the column electrodes being divided into column sub-electrodes which define sub-pixels at the location of the row electrode, characterized in that a part of the surface area of at least one sub-pixel is opaque at the location of a column sub-electrode so that the surface areas of the sub-pixels which can switch between two optical states are in the ratio of $2^n:2^{n-1}:...2:1$ ($n \geq 3$) or 4:2:1, respectively, the display device being further provided with a drive circuit for alternately bringing the sub-pixels to one of the optical states during a $(1/p + 1)^{st}$ and a $(p/p + 1)^{st}$ part of a drive period of a picture, where $p = 2^{n+1}$ and $p = 8$, respectively.

10. A display device comprising a bistable electro-optical medium between two supporting plates provided with column electrodes and row electrodes, respectively, which define pixels at the location of their crossings, the column electrodes being divided into column sub-electrodes which define sub-pixels at the location of a row electrode, characterized in that the widths of the sub-electrodes are in the ratio of $2^n:2^{n-1}:...2:2$ ($n \geq 3$), and 4:2:2, respectively, and at least a part of the surface area of the pixel is opaque at the location of at least one of the sub-electrodes of the same width, the display device being further provided with a drive circuit for alternately bringing the sub-pixels to one of the optical states during a $(1/p + 1)^{st}$ and a $(p/p + 1)^{st}$ part of a drive period of a picture, where $p = 2^{n+1}$ and $p = 8$, respectively.

11. A display device comprising a bistable electro-optical medium between two supporting plates provided with column electrodes and row electrodes, respectively, which define pixels at the location of their crossings, the column electrodes being divided into n column sub-electrodes of equal widths which define sub-pixels at the location of a row electrode, characterized in that half the surface area of the pixel is opaque at the location of at least one of the sub-electrodes, the display device being further provided with a drive circuit for alternately bringing the sub-pixels to one of the optical states during a $(1/p + 1)^{st}$ part and a $(p/p + 1)^{st}$ part of a picture, where $p = 2n$.

12. A display device as claimed in any one of the preceding Claims, characterized in that the electro-optical medium comprises a ferro-electric liquid crystal.

FIG.1

FIG.2

FIG.3

FIG.4

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 379 810 (COMMISSARIAT ENERGIE ATOMIQUE )<br>* page 3, line 1 - line 17 *<br>* page 3, line 26 - page 4, line 10 *<br>* page 7, line 20 - line 27 *<br>* claims 3-7; figure 2 * | 1-7,12 | G02F1/1343<br>G09G3/36 |
| Y | idem | 9-11 | |
| Y | EP-A-0 261 898 (EMI PLC THORN )<br>* column 1, line 1 - line 3 *<br>* column 1, line 35 - column 2, line 38 *<br>* column 4, line 54 - column 5, line 8 *<br>* claims 5,6 * | 9-11 | |

TECHNICAL FIELDS
SEARCHED    (Int.Cl.5)

G02F
G09G

The present search report has been drawn up for all claims

| Place of search | Date of completion of the search | Examiner |
|---|---|---|
| THE HAGUE | 21 March 1994 | Iasevoli, R |

EPO FORM 1503 03.82 (P04C01)